# EUROPÄISCHE PATENTSCHRIFT

(11) **EP 2 171 399 B1**
(45) Veröffentlichungstag und Bekanntmachung des Hinweises auf die Patenterteilung: **18.01.2017**
(21) Anmeldenummer: 08759460.2
(22) Anmeldetag: 08.05.2008
(51) Int. Cl.: G01C 21/36

(54) **VERDECKUNGSARME DARSTELLUNG DICHT BENACHBARTER TOPOGRAFISCHER OBJEKTE**
LOW-OVERLAP DISPLAY OF CLOSELY ADJACENT TOPOGRAPHIC OBJECTS
REPRÉSENTATION AVEC FAIBLE OCCULTATION D'OBJETS TOPOGRAPHIQUES VOISINS

(30) Priorität: 29.06.2007 DE 102007030229
(43) Veröffentlichungstag der Anmeldung: 07.04.2010
(73) Patentinhaber: Robert Bosch GmbH, 70442 Stuttgart (DE)
(72) Erfinder: XU, Yonglong, 215021 Suzhou/ Industrial Park (DE)
(86) Internationale Anmeldenummer: PCT/EP2008/055673
(87) Internationale Veröffentlichungsnummer: WO 2009/003747

(56) Entgegenhaltungen:
- EP-A- 1 378 723
- JP-A- 2001 317 955
- US-A1- 2004 243 306

## Beschreibung

Die Erfindung betrifft ein Verfahren zur stilisierten und verdeckungsfreien Darstellung topografischer Objekte, die geographisch dicht nebeneinander liegen bzw. identische geographische Positionen besitzen, auf elektronisch anzeigbaren Landkarten, im Folgenden auch als elektronische Karten bezeichnet. Ein Anwendungsgebiet liegt in der verdeckungsarmen Darstellung von Sonderzielen auf Karten, wie sie auf elektronischen Anzeigemitteln von Fahrzeug-Navigationssystemen dargestellt werden. Derartige Sonderziele werden häufig auch als POIs (points of interest) bezeichnet und können beispielsweise von Benutzern derart ausgestatteter Navigationssysteme im Zuge einer Routenplanung als Fahrziele vorgegeben oder durch entsprechende Software angezeigt werden.

Der Begriff topografische Objekte schließt im Sinne der Erfindung auch künstliche Objekte mit ein.

### Stand der Technik

Die Illustration von Sonderzielen durch verschiedene stilisierte Darstellungen bildet in vielen Fällen eine Komfortfunktion von Navigationssystemen in Kraftfahrzeugen. Derartige Navigationssysteme basieren in der Regel auf der Nutzung elektronisch gespeicherter topografischer Daten, die in Form von mehr oder weniger generalisierten Karten auf elektronischen Anzeigemitteln, also Monitoren oder Displays, zur Anzeige gebracht werden. Die geografischen Positionen verschiedener topografischer Objekte kommen dabei in erster Näherung maßstabsgetreu zur Darstellung. Darüber hinaus werden bestimmte Sonderziele in stilisierter Form der topografischen Kartendarstellung überlagert, um einen Benutzer auf besonders sehenswerte Besonderheiten in der Fahrzeugumgebung hinzuweisen bzw. seine Orientierung zu erleichtern. Insbesondere in Innenstadtbereichen kann es dabei zu Problemen führen, da die geografischen Positionen benachbarter Sonderziele einerseits sehr dicht nebeneinander liegen können, andererseits die stilisierten Darstellungen dieser Sonderziele eine gewisse Mindestgröße nicht unterschreiten sollten, um ihre grafische Wirkung nicht zu verfehlen. Die stilisierte Darstellung erfolgt dabei in der Regel unabhängig vom Maßstab der topografischen Karte, während die Abstände der geografischen Positionen streng vom Maßstab des dargestellten Kartenausschnitts abhängen.

Es ist daher üblich, digital erfasste Sonderziele in stilisierter Form überlappend in elektronische Karten zu integriere, da eine positionsnahe Anordnung ohne eine gegenseitige Verdeckung häufig nicht möglich erscheint. Es ist bekannt, diese Darstellung so vorzunehmen, dass ausschließlich jenes Sonderziel, das zuletzt dargestellt wurde, vollständig angezeigt wird, was in Fällen, in denen die Bedeutung von Sonderzielen für einen Nutzer nicht von deren Anzeigereihenfolge abhängt, als Nachteil empfunden wird.

Dieses Problem besteht insbesondere bei der Verwendung kleiner Bildschirme, wie beispielsweise den Monitoren von Fahrzeug-Navigationssystemen.

Es ist bekannt, unterschiedlichen Kategorien von Sonderzielen unterschiedliche Prioritäten zuzuweisen. Diese Prioritäten sorgen für Überlagerungsregeln zwischen den grafischen Elementen bei der Darstellung dicht benachbarter Sonderziele. Das führt bei einer sehr dichten Anordnung zahlreicher Sonderziele theoretisch dazu, dass nur Sonderziele mit der höchsten Priorität vollständig angezeigt und wahrgenommen werden können, während andere Sonderziele zumindest teilweise verdeckt werden. Dadurch kann die Situation entstehen, dass von einem Nutzer im Zuge einer Routenplanung eingegebene Sonderziele aufgrund ihrer zu geringen Priorität permanent verdeckt dargestellt werden, was die Orientierung auf der abzufahrenden Route erschwert bzw. die grafische Anreicherung durch eine an sich gewünschte stilisierte Darstellung von Sonderzielen teilweise konterkariert.

Die JP 2001 317955 A offenbart ein Verfahren zum Darstellen von benachbarten topographischen Objekten, bei dem stilisierte Darstellungen der Objekte zeitlich versetzt angezeigt werden.

Die US 2004/243306 A1 offenbart ein Verfahren zum Darstellen von benachbarten topographischen Objekten, bei dem stilisierte Darstellungen der Objekte räumlich versetzt dargestellt werden.

### Offenbarung der Erfindung

Eine Aufgabe der Erfindung besteht darin, eine Möglichkeit anzugeben, topografische Objekte, insbesondere Sonderziele als POIs, mit völlig identischen oder dicht benachbarten geografischen Positionen mit möglichst geringer gegenseitiger Verdeckung und ohne Beeinträchtigung eines Kartenbildes in elektronisch anzeigbare Landkarten zu integrieren.

Diese Aufgabe wird durch ein Verfahren und eine Vorrichtung mit den Merkmalen der unabhängigen Patentansprüche gelöst. Die abhängigen Ansprüche betreffen vorteilhafte Ausgestaltungen der Erfindung.

Die Erfindung geht davon aus, dass es für Nutzer von elektronischen Karten, in denen verschiedene topografische Objekte besonders hervorgehoben werden sollen, insbesondere von Bedeutung ist, Kartenbereiche, in denen sich die geografischen Positionen der hervorzuhebenden topografischen Objekte befinden, in möglichst geringem Ausmaß durch die Darstellung eben dieser hervorzuhebenden Objekte zu verdecken. Dennoch sollen die hervorzuhebenden topografischen Objekte selbst möglichst verdeckungsfrei dargestellt werden. Ob dabei andere Objekte in dem Kartenbereich, in dem die hervorzuhebenden topografischen Objekte in stilisierter Form abgebildet werden, verdeckt werden, ist von sekundärer Bedeutung, wenn die Orientierung und/oder die Routenführung dadurch nicht wesentlich erschwert wird. Die Erfindung besteht dem gemäß in einem Verfahren zur stilisierten Darstellung dicht benachbarter topografischer Objekte auf elektronischen Karten, bei dem mehrere dicht benachbarte topografische Objekte in Form einer stilisierten Darstellung in eine auf einem elektronischen Anzeigemittel dargestellte Karte integriert werden, wobei zumindest eine permanente Verdeckung topografischer Elemente der Karte durch die stilisierte Darstellung in dem Kartenbereich, der die geografischen Positionen der stilisiert dargestellten topografischen Objekte umfasst, durch eine räumlich versetzte Darstellung und/oder durch eine in einer Dimension außerhalb der Kartenebene versetzte Darstellung und/oder durch eine überlagerte Darstellung mit einer Verknüpfung zu einem Popupfenster, in dem die Überlagerung der stilisiert dargestellten topografischen Objekte zumindest teilweise aufgehoben wird und/oder durch eine Änderung des Maßstabes der dargestellten Karte im Bereich der geografischen Positionen der stilisiert dargestellten topografischen Objekte vermieden wird. Dabei erfolgt die Darstellung der Karte in dreidimensionaler Form, wobei mehrere dicht benachbarte topographische Objekte in stilisierter Form in Richtung der Normalen der Kartenebene gestapelt dargestellt werden.

Unter stilisierter Darstellung ist dabei jede grafische Ausgestaltung zu verstehen, welche von einem Betrachter in eindeutigen Zusammenhang mit einem darzustellenden topografischen Objekt gebracht werden kann. Diese grafische Ausgestaltung kann entweder in Anlehnung an das tatsächliche Form- und Erscheinungsbild des darzustellenden topografischen Objektes erfolgen oder auch in einem Ersatz des Objektes durch Symbole oder andere grafische Elemente bestehen. In jedem Fall kann die Größe der stilisierten Darstellung unabhängig vom Abbildungsmaßstab der zugehörigen Karte gewählt werden und deutlich größer sein, als die gemäß dem Abbildungsmaßstab der zugehörigen Karte auf der Karte durch das topografische Objekt überdeckte Fläche. Unter dicht benachbarten topografischen Objekten sind im Sinne der Erfindung topografische Objekte zu verstehen, deren geographische Positionen sich bei maßstabge treuer Abbildung auf einer topografischen Karte in geringerem Abstand zueinander befinden, als die Erstreckung einer stilisierten Darstellung eines oder mehrerer solcher Objekte beträgt, so dass sie visuell nicht mehr oder schwer trennbar wahrgenommen werden können. Das gilt zwangsläufig auch für Objekte mit identischen geografischen Positionen, beispielsweise für mehrere Objekte in einem Haus oder einer Einrichtung.

### Vorteilhafte Wirkungen

Das erfindungsgemäße Verfahren lässt sich auf Grund der häufig kleinen Abmessungen der elektronischen Anzeigemittel insbesondere mit Vorteil anwenden, wenn als stilisiert dargestellte topografische Objekte Sonderziele (POIs) auf einem Monitor oder Display eines Fahrzeug-Navigationssystems dargestellt werden. Grundsätzlich lässt sich das erfindungsgemäße Verfahren auch für die kartografische Darstellung anderer Arten von Objekten auf einem elektronischen Anzeigemittel, also auch herkömmlichen Computerbildschirm einsetzen, wenn diese Objekte gleiche oder dicht aneinander liegende Positionen besitzen. Als Beispiel können dicht benachbarte Infrastrukturelemente, wie beispielsweise parallele Straßen und/oder Eisenbahnschienen, genannt werden, die ebenfalls häufig in vergrößerter Form in Karten, insbesondere in elektronischen Karten eingetragen werden und zu ähnlichen Anordnungsproblemen führen können.

### Kurze Beschreibung der Zeichnungen

An Ausführungsbeispielen wird die Erfindung näher erläutert.

Es zeigen:
Fig.1 eine dreidimensionale Darstellung einer elektronisch anzeigbaren Karte mit außerhalb der Kartenebene stilisiert und versetzt dargestellten topografischen Objekten in Form touristischer Sonderziele und
Fig. 2 eine zweidimensionale Darstellung einer elektronisch anzeigbaren Karte mit einer überlagerten Darstellung mehrerer Sonderziele in der Kartenebene und Verknüpfung zu einem Popupfenster.

### Ausführungsformen der Erfindung

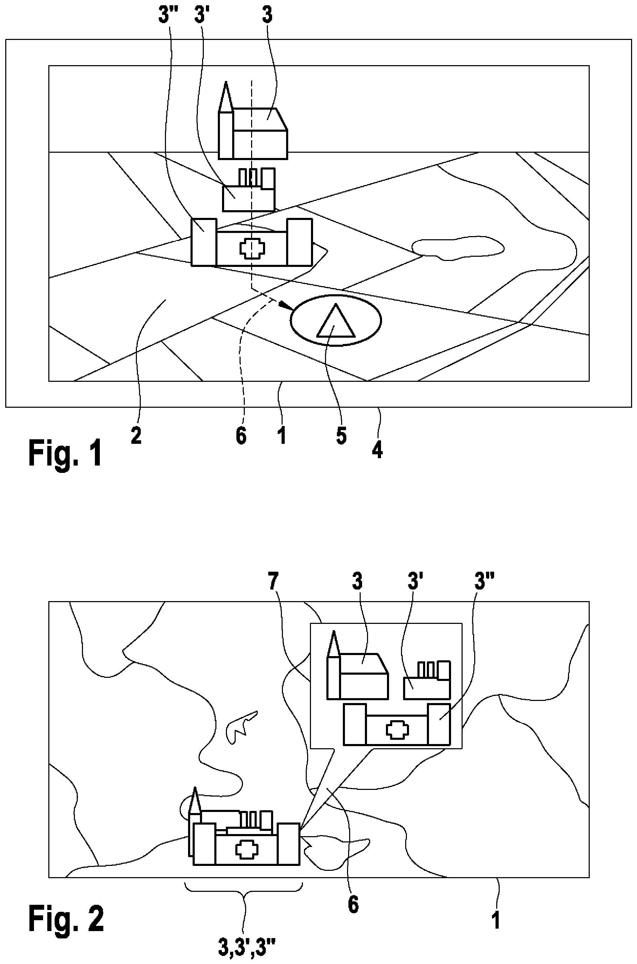

Fig. 1 zeigt eine gemäß dem erfindungsgemäßen Verfahren ausgeführte dreidimensionale Darstellung einer elektronisch anzeigbaren Karte 1 mit außerhalb der Kartenebene 2 und versetzt zu ihrer geografischen Position stilisierten Darstellungen 3, 3', 3" topografischen Objekten in Form touristischer Sonderziele auf einem Monitor 4 eines Navigationssystems eines Kraftfahrzeuges. Dabei dient eine dreidimensional dargestellte topografische Karte als Hinter- oder Untergrundkarte und bildet die Kartenebene 2. Die Perspektive ist so gewählt, dass auch in dieser Darstellungsform die Karte ausreichend übersichtlich wirkt und problemlos zur Orientierung genutzt werden kann. Auf der dreidimensionalen Karte ist die geographische Position von mehreren Sonderzielen gekennzeichnet, wobei der Kartenmaßstab so eingestellt ist, dass die dicht benachbarten Positionen der einzelnen Sonderziele durch eine einzige Positionsmarkierung 5 gekennzeichnet sind, in diesem Maßstab also als identisch anzusehen sind. Stilisierte Darstellungen 3, 3', 3" der einzelnen Sonderziele sind in Richtung der Normalen der Kartenebene 2 übereinander gestapelt dargestellt, so dass eine Verdeckung der einzelnen stilisierten Darstellungen 3, 3',3" der einzelnen Sonderziele weitgehend vermieden wird. Um das kartierte Umfeld der Positionsmarkierung 5 ungehindert einsehen zu können, erfolgt die Anordnung der stilisierten Darstellungen 3, 3', 3" außerdem mit einem seitlichen Versatz bezüglich der Positionsmarkierung 5. Obwohl der Flächenbedarf auf dem Monitor 4, der für eine derartige Anordnung der stilisierten Darstellungen 3, 3', 3" benötigt wird, gegenüber herkömmlichen Darstellungen mit nebeneinander angeordneten stilisierten Darstellungen von Sonderzielen kaum oder nur um den Preis einer Inkaufnahme einer teilweisen Überdeckung der einzelnen stilisierten Darstellungen 3, 3', 3" verändert werden kann, ergibt sich insbesondere in Abhängigkeit von den Sehgewohnheiten der Benutzer von Navigationssystemen durch den schwebenden Eindruck, den derart angeordnete grafische Elemente vermitteln, ein durch die stilisierten Darstellungen 3, 3', 3" scheinbar wesentlich geringer beeinträchtigter visueller Eindruck des kartierten Bereiches um die Positionsmarkierung 5. Genau auf diesen Bereich soll die Aufmerksamkeit eines Betrachters durch die Einfügung der stilisierten Darstellungen 3, 3', 3" der Sonderziele gelenkt werden. Um der Gefahr einer Fehlorientierung, die durch eine Kombination aus Elementen unterschiedlicher Dimensionalität in einer derartigen dreidimensionalen Darstellung mit mehreren übereinander angeordneten stilisierten Darstellungen topografischer Sonderziele gegeben sein kann, zu begegnen, wird des weiteren vorteilhafterweise ein grafisches Verbindungselement 6 angezeigt, das die einzelnen Sonderziele eindeutig der Positionsmarkierung 5 in der dreidimensionalen Karte zuordnet.

Anstelle der gestapelten Darstellung über dreidimensionalen Karten ist es in einem nicht- erfindungsgemässen Beispiel auch möglich die stilisierte Darstellung mehrerer dicht benachbarter topografischer Objekte zyklisch wechselnd in Form eines sogenannten Toggling vorzunehmen. Dazu kann es vorteilhaft sein, wenn die Geschwindigkeit des Toggling manuell einstellbar ist, um sie den Wahrnehmungsgepflogenheiten eines Systembenutzers anzupassen. Es kann ebenso vorteilhaft sein, einen Toggling-Modus manuell aufzurufen, wenn eine überlagerte Darstellung mehrerer stilisierter Sonderziele auf einen Kartenbetrachter zu unübersichtlich wirkt. Ein Toggling hat den Vorteil, dass der Flächenbedarf auf einem Anzeigemittel deutlich reduziert wird, da die verschiedenen stilisierten Darstellungen nicht mehr gleichzeitig nebeneinander dargestellt werden müssen, um die vollständige visuelle Erfassung alle stilisierten Darstellungen zu ermöglichen. Es lassen sich Toggling-Modi mit zwei- bzw. dreidimensionalen Hinter- oder Untergrundkarten kombinieren und bewirken in jedem Fall eine deutliche Reduzierung der Abdeckeffekte auf der eigentlichen Karte durch stilisierte Darstellungen, insbesondere von Sonderzielen.

Eine weitere bevorzugte Variante des erfindungsgemäßen Verfahrens beruht darauf, dass eine benutzerinitiierte Auswahl der dicht benachbarten topografischen Objekte oder eines Kartenausschnitts um diese vorgenommen wird, um sie für eine stilisierte Darstellung vergrößert darzustellen.

Eine weitere bevorzugte Variante des erfindungsgemäßen Verfahrens beruht darauf, dass ein benutzerinitiierter Maßstabswechsel vorgenommen wird, um einen Kartenbereich mit mehreren dicht benachbarten für eine stilisierte Darstellung vorgesehenen bzw. dargestellten topografischen Objekten vergrößert darzustellen. In der Ausgangsdarstellung werden dabei mehrere dicht benachbarte bzw. mit identischer Position versehene stilisierte Darstellungen von Sonderzielen in einer elektronischen Karte dargestellt, die sich gegenseitig teilweise oder vollständig überdecken. Im Falle einer vollständigen Überdeckung wird dem Nutzer ein Hinweis ausgegeben, der darauf verweist, dass mehrere stilisierte Darstellungen von Sonderzielen unter der Darstellung verborgen sind, was gegebenenfalls durch Blinken oder farbliche Hervorhebung der einzigen sichtbaren stilisierten Darstellung eines Sonderzieles erfolgen kann. Durch Setzen eines Kursors auf die Stelle, wo sich diese stilisierte Darstellung des Sonderzieles befindet, wird ein Fenster geöffnet, gegebenenfalls in Form eines Popup-Fensters, in welchem diese Stelle mit allen ursprünglich übereinander dargestellten bzw. ursprünglich unsichtbaren stilisierten Darstellungen von Sonderzielen in Form einer Ausschnittsvergrößerung dargestellt wird. Die stilisierte Darstellung der Sonderziele in dem geöffneten Fenster mit verändertem Maßstab kann wiederum in den bereits beschriebenen Formen erfolgen.

Daneben kann es bei einem ausreichend angepassten Abbildungsmaßstab ebenso zweckmäßig sein, die stilisierten Darstellungen der einzelnen Sonderziele direkt in der Kartenebene benachbart vorzunehmen, da durch den veränderten Abbildungsmaßstab der Karte die durch die stilisierten Darstellungen verdeckten Bereiche in der Natur relativ gering sind und einen Betrachter der Karte nur unwesentlich bei seiner Orientierung behindern werden. Es ist ebenso vorteilhaft, wenn vor einem benutzerinitiierten Maßstabswechsel automatisch ein zur Vergrößerung empfohlener Kartenausschnitt, beispielsweise in Kreis- oder Rechteckform, markiert und dem Benutzer angezeigt wird. Dieser Kartenausschnitt ist daraufhin optimiert, dass eine übersichtliche Darstellbarkeit aller enthaltenen Sonderziele in Form stilisierter Darstellungen gewährleistet ist, ohne durch eine unnötig große Vergrößerung zu viele Umgebungsinformationen des Kartenausschnittes auszublenden. Auch ein derart vorausgewählter Kartenausschnitt kann innerhalb der ursprünglich dargestellten Karte in einem Fenster oder Popupfenster in bereits beschriebener Weise dargestellt werden. Im Falle eines Popupfensters wird die Orientierung des Benutzers wiederum dadurch erleichtert, dass eine ausgezogene Spitze des Popupfensters ein grafisches Verbindungselement bildet, welches die stilisierte Darstellung eines topografischen Objektes, in diesem Falle im Popupfenster dargestellt, mit der exakten geografischen Position dieses Objektes auf der ursprünglichen elektronischen Karte verbindet. Ergänzend zu den stilisierten Darstellungen einzelner topografischer Objekte können weitere Zusatzinformationen zu den dargestellten topografischen Objekten in grafischer Form oder Textform angezeigt bzw. vorgelesen werden. Auch hierzu eignen sich in besonderer Weise wiederum Popupfenster, die benutzerinitiiert geöffnet werden. Zusatzinformationen, die in dieser Weise zur Verfügung gestellt werden können, sind beispielsweise wichtige Adressen, Telefonnummern, E-mail-Anschrift usw., die mit dem jeweiligen Sonderziel in näherem Zusammenhang stehen und eine weitere touristische Erschließung oder systemübergreifende Kommunikation durch den Systembenutzer erleichtern.

Fig. 2 zeigt eine nicht-erfindungsgemässe zweidimensionale Darstellung einer elektronisch anzeigbaren Karte 1 mit einer Überlagerung mehrerer stilisierter Darstellungen 3, 3', 3" mehrerer verschiedener Sonderziele und einer Verknüpfung dieser überlagerten Darstellung zu einem Popupfenster 7. Diese Form einer zweidimensionalen elektronischen Karte weist zunächst in einem Basismodus eine weitgehend überlagerte stilisierte Darstellung mehrerer dicht benachbarter Sonderziele auf, was den Bedeckungsgrad der Karte gering hält und eine Orientierung erleichtert. Bei Bedarf erfolgt benutzerinitiiert die Öffnung eines Popupfensters, in dem die stilisierten Darstellungen 3, 3', 3" der einzelnen Sonderziele nunmehr seitlich versetzt dargestellt werden, ohne einen Kartenabschnitt zu vergrößern. Alternativ kann auch der betroffene Kartenabschnitt mitvergrößert werden. Die stilisierten Darstellungen 3, 3', 3" der einzelnen Sonderziele können nunmehr von einem Betrachter vollständig in Augenschein genommen werden, was mit einer umfassenderen bis vollständigen Verdeckung topografischer Elemente auf der Karte 1 verbunden ist. Das Öffnen des Popupfensters 7 kann beispielsweise durch Setzen eines Cursors auf die überlagerte Anordnung mehrerer stilisierter Darstellungen 3, 3', 3" oder durch andere selektierende Bedienelemente vorgenommen werden. Wird ein erneuter Blick auf die Karte 1 erforderlich, kann durch schnelles Schließen dieses Popupfensters 7 der Bedeckungsgrad wieder reduziert werden, was gegenüber Darstellungen mit permanent in eine Hintergrundkarte eingefügten, räumlich versetzen stilisierten Darstellungen von dicht benachbarten Sonderzielen einen erheblichen Vorteil bedeutet.

Ein weiterer Vorzug des Einsatzes von Popupfenstern 7 besteht in der Möglichkeit, die Anordnung einer komprimierten Darstellung in Form der an einer Kartenposition überlagerten stilisierten Darstellungen 3, 3', 3" der verschiedenen Sonderziele und die Anordnung einer extrahierten Darstellung mit nebeneinander abgebildeten stilisierten Darstellungen 3, 3', 3" weitgehend unabhängig voneinander vornehmen zu können. Der Nutzer des Verfahrens kann so in einem Kartenbereich, dem sein besonderes Interesse gilt, zwischen einer komprimierten, jedoch relativ positionstreuen stilisierten Darstellung von Sonderzielen und einer in einem in Zusammenhang mit den interessierenden Sonderzielen weniger bedeutsamen Bereich der Karte platzierten expandierten Darstellung wählen, was eine Verdeckung der interessierenden Kartenbereiche nahezu völlig vermeidet. Der thematische Zusammenhang kann dabei wiederum durch ein grafisches Verbindungselement 6 gewahrt bleiben, welches bei geöffnetem Popupfenster 7 von diesem Popupfenster 7 zur exakten geografischen Position der stilisiert dargestellten Sonderziele 3, 3', 3" oder einer entsprechenden Positionsmarke führt. Große Popupfenster 7 können vorteilhafter Weise auch teiltransparent ausgestaltet werden. In diesem Fall wird kein Bereich der Karte 1 beim Öffnen des Popupfensters 7 vollständig ausgeblendet, und die Größe des Popupfensters 7 kann ohne starke Beeinträchtigung der Nutzung der Karte 1 in einem sogenannten Mutterfenster als Orientierungshilfe bis zur Größe des Mutterfensters, also der gesamten Kartendarstellung, variiert werden.

Falls die Sonderziele im Popupfenster immer noch nicht trennbar wahrgenommen werden können, kann benutzerinitiiert ein weiteres Popupfenster nach dem gleichen Prinzip aufgemacht werden.

Bei Anzeige und/oder Vorlesen von Zusatzinformationen, wie Telefonnummern und/oder E-mail-Anschrift, kann benutzerinitiiert z.B. durch Drücken eines dafür vorgesehenen Buttons eine Kommunikation in Form von Telefongesprächen und/oder Emails durchgeführt werden, falls die dafür notwendigen Einrichtungen vorhanden sind.

Bei genauer Betrachtung einzelner Sonderziele einschließlich deren Zusatzinformationen kann der Benutzer ein bestimmtes Sonderziel davon als Fahrziel auswählen und die Routenführung dorthin starten. Das heißt, dass nach dem erfindungsgemäßen Verfahren benutzerinitiiert eine Routenführung zu einem aus der angezeigten Karte ausgewählten Sonderziel gestartet werden kann.

Nach dem erfindungsgemäßen Verfahren ist es auf vorteilhafte Weise möglich, bei einer aktiven Routenführung zu einem Sonderziel dieses Sonderziel permanent und verdeckungsfrei stilisiert auf dem Monitor 4 darzustellen, wenn sich die geographische Position dieses Sonderzieles im auf dem Monitor 4 dargestellten Kartenbereich befindet. Es ist in diesem Fall auch möglich, das Sonderziel, zu dem eine aktive Routenführung erfolgen soll, gegenüber anderen Sonderzielen nochmals grafisch hervorzuheben.

## Patentansprüche

1. Verfahren zur stilisierten Darstellung dicht benachbarter topografischer Objekte auf elektronisch anzeigbaren Karten, bei dem mehrere dicht benachbarte topografische Objekte in Form einer stilisierten Darstellung (3, 3', 3") in eine auf einem elektronischen Anzeigemittel dargestellte Karte (1) integriert werden, wobei zumindest eine permanente Verdeckung topografischer Elemente der Karte (1) durch die stilisierte Darstellung (3, 3', 3") in dem Kartenbereich, der die geografischen Positionen der stilisiert dargestellten topografischen Objekte umfasst, durch eine räumlich versetzte Darstellung und/oder durch eine in einer Dimension außerhalb der Kartenebene (2) versetzte Darstellung und/oder durch eine überlagerte Darstellung mit einer Verknüpfung zu einem Popupfenster (7), in dem die Überlagerung der stilisiert dargestellten topografischen Objekte zumindest teilweise aufgehoben wird, und/oder durch eine Änderung des Maßstabes der dargestellten Karte (1) im Bereich der geografischen Positionen der stilisiert dargestellten topografischen Objekte vermieden wird, **dadurch gekennzeichnet, dass** die Darstellung der Karte (1) in dreidimensionaler Form erfolgt, wobei mehrere dicht benachbarte topografische Objekte in stilisierter Form in Richtung der Normalen der Kartenebene (2) gestapelt dargestellt werden.

2. Verfahren nach Anspruch 1, **dadurch gekennzeichnet, dass** als stilisiert dargestellte topografische Objekte Sonderziele (POIs) auf einem Monitor (4) eines Fahrzeugnavigationssystems dargestellt werden.

3. Verfahren nach einem der Ansprüche 1 oder 2, **dadurch gekennzeichnet, dass** eine benutzerinitiierte Auswahl der dicht benachbarten topografischen Objekte oder eines Kartenausschnitts um diese vorgenommen wird, um sie für eine stilisierte Darstellung vergrößert darzustellen.

4. Verfahren nach einem der Ansprüche 1 bis 3, **dadurch gekennzeichnet, dass** ein benutzerinitiierter Maßstabswechsel vorgenommen wird, um einen Kartenbereich mit mehreren dicht benachbarten für eine stilisierte Darstellung vorgesehenen topografischen Objekten vergrößert darzustellen.

5. Verfahren nach Anspruch 4, **dadurch gekennzeichnet, dass** vor dem benutzerinitiierten Maßstabwechsel automatisch ein zur Vergrößerung empfohlener Kartenausschnitt markiert wird.

6. Verfahren nach Anspruch 4 oder 5, **dadurch gekennzeichnet, dass** die stilisierte Darstellung der topografischen Objekte in dem vergrößerten Kartenausschnitt durch eine in einer Dimension außerhalb der Kartenebene versetzte Darstellung und/oder eine seitlich in der Kartenebene (2) versetzte Darstellung erfolgt.

7. Verfahren nach einem der Ansprüche 1 bis 6, **dadurch gekennzeichnet, dass** ein grafisches Verbindungselement (6) angezeigt wird, welches die stilisierte Darstellung (3, 3', 3") eines topografischen Objektes mit der exakten geografischen Position dieses Objektes oder einer Positionsmarkierung (5) auf der Karte verbindet.

8. Verfahren nach einem der Ansprüche 1 bis 7, **dadurch gekennzeichnet, dass** bei einer aktiven Routenführung zu einem Sonderziel das Sonderziel stets sichtbar und ggf. hervorgehoben angezeigt wird.

9. Verfahren nach einem der Ansprüche 1 bis 8, **dadurch gekennzeichnet, dass** Zusatzinformationen zu dargestellten topografischen Objekten angezeigt und/oder vorgelesen werden.

10. Verfahren nach Anspruch 9, **dadurch gekennzeichnet, dass** die Zusatzinformationen benutzerinitiiert, insbesondere in einem Popup-Fenster, angezeigt werden.

11. Verfahren nach den Ansprüchen 9 oder 10, **dadurch gekennzeichnet, dass** benutzerinitiiert eine Kommunikation, die ein Sonderziel mit hinterlegter Telefonnummer und/oder E-mail-Anschrift als Zusatzinformation betrifft, vorgenommen wird.

12. Verfahren nach einem der Ansprüche 1 bis 11, **dadurch gekennzeichnet, dass** benutzerinitiiert eine Routenführung zu einem aus der angezeigten Karte ausgewählten Sonderziel gestartet wird.

13. Vorrichtung zur Durchführung des Verfahrens nach einem der vorhergehenden Ansprüche.

## Claims

1. Method for stylized representation of closely adjacent topographical objects on electronically displayable maps, in which multiple closely adjacent topographical objects are integrated in the form of a stylized representation (3, 3', 3") into a map (1) represented on an electronic display means, wherein at least one permanent masking of topographical elements of the map (1) by the stylized representation (3, 3', 3") in the map region that comprises the geographical positions of the topographical objects represented in stylized fashion is avoided by a physically offset representation and/or by a representation that is offset in a dimension outside the map plane (2) and/or by a superimposed representation with a link to a popup window (7), in which the superimposition of the topographical objects represented in stylized fashion is at least partially suspended, and/or by a change of the scale of the represented map (1) in the region of the geographical positions of the topographical objects represented in stylized fashion, **characterized in that** the map (1) is represented in three-dimensional form, with multiple closely adjacent topographical objects being represented in stylized form in a manner stacked in the direction of the normal to the map plane (2).

2. Method according to Claim 1, **characterized in that** special destinations (POIs) are represented on a monitor (4) of a vehicle navigation system as topographical objects represented in stylized fashion.

3. Method according to either of Claims 1 and 2, **characterized in that** a user-initiated selection of the closely adjacent topographical objects or of a map detail around said topographical objects is made in order to represent them in enlarged fashion for a stylized representation.

4. Method according to one of Claims 1 to 3, **characterized in that** a user-initiated change of scale is made in order to represent a map region having multiple closely adjacent topographical objects provided for a stylized representation in enlarged fashion.

5. Method according to Claim 4, **characterized in that** the user-initiated change of scale is preceded by a map detail recommended for enlargement being automatically marked.

6. Method according to Claim 4 or 5, **characterized in that** the stylized representation of the topographical objects in the enlarged map detail is effected by a representation that is offset in a dimension outside the map plane and/or a representation that is offset at the side in a map plane (2).

7. Method according to one of Claims 1 to 6, **characterized in that** a graphical connecting element (6) is displayed that connects the stylized representation (3, 3', 3") of a topographical object to the exact geographical position of this object or to a position marker (5) on the map.

8. Method according to one of Claims 1 to 7, **characterized in that** for an active route guidance to a special destination, the special destination is displayed so as to be always visible and possibly highlighted.

9. Method according to one of Claims 1 to 8, **characterized in that** supplementary information pertaining to represented topographical objects is displayed and/or read aloud.

10. Method according to Claim 9, **characterized in that** the supplementary information is displayed in user-initiated fashion, particularly in a popup window.

11. Method according to Claims 9 or 10, **characterized in that** a communication that relates to a special destination with a stored telephone number and/or e-mail address as supplementary information is performed in user-initiated fashion.

12. Method according to one of Claims 1 to 11, **characterized in that** a route guidance to a special destination selected from the displayed map is started in user-initiated fashion.

13. Apparatus for performing the method according to one of the preceding claims.

## Revendications

1. Procédé pour la représentation stylisée d'objets topographiques très voisins sur des cartes pouvant être affichées sous forme électronique, dans lequel plusieurs objets topographiques très voisins sont intégrés sous la forme d'une représentation stylisée (3, 3', 3") dans une carte (1) représentée sur un moyen d'affichage électronique, dans lequel au moins une occultation permanente d'éléments topographiques de la carte (1) est empêchée par la représentation stylisée (3, 3', 3") dans la zone de la carte qui comprend les positions géographiques des objets topographiques représentés de manière stylisée, par une représentation décalée dans l'espace et/ou par une représentation décalée dans une dimension à l'extérieur du plan de la carte (2) et/ou par une représentation superposée avec un lien vers une fenêtre surgissante (7) dans laquelle la superposition des objets topographiques représentés de manière stylisée est au moins partiellement supprimée et/ou par une modification de l'échelle de la carte (1) représentée dans la zone des positions géographiques des objets topographiques représentés de manière stylisée, **caractérisé en ce que** la représentation de la carte (1) est effectuée sous une forme tridimensionnelle, dans lequel plusieurs objets topographiques très voisins sont représentés sous forme stylisée de manière empilée dans la direction de la normale au plan (2) de la carte.

2. Procédé selon la revendication 1, **caractérisé en ce que** des points d'intérêt (POI) sont représentés sur un écran (4) d'un système de navigation de véhicule sous la forme d'objets topographiques représentés de manière stylisée.

3. Procédé selon l'une des revendications 1 ou 2, **caractérisé en ce qu'**une sélection déclenchée par l'utilisateur des objets topographiques très voisins ou d'une partie de la carte entourant ces derniers est effectuée afin de les représenter de manière grossie pour une représentation stylisée.

4. Procédé selon l'une quelconque des revendications 1 à 3, **caractérisé en ce qu'**un changement d'échelle déclenché par l'utilisateur est effectué afin de représenter de manière grossie une zone de la carte comportant de multiples objets topographiques très voisins prévus pour une représentation stylisée.

5. Procédé selon la revendication 4, **caractérisé en ce que**, avant le changement d'échelle déclenché par l'utilisateur, une partie de carte recommandée pour le grossissement est marquée.

6. Procédé selon la revendication 4 ou 5, **caractérisé en ce que** la représentation stylisée des objets topographiques dans la partie de carte grossie est effectuée par une représentation décalée dans une dimension à l'extérieur du plan de la carte et/ou par une représentation décalée latéralement dans le plan (2) de la carte.

7. Procédé selon l'une quelconque des revendications 1 à 6, **caractérisé en ce qu'**un élément de liaison graphique (6) est représenté, celui-ci reliant la représentation stylisée (3, 3', 3") d'un objet topographique à la position géographique exacte dudit objet ou à un repère de position (5) sur la carte.

8. Procédé selon l'une quelconque des revendications 1 à 7, **caractérisé en ce que**, lors d'un guidage routier actif vers un point d'intérêt, le point d'intérêt est affiché continument de manière visible et, le cas échéant, en surbrillance.

9. Procédé selon l'une quelconque des revendications 1 à 8, **caractérisé en ce que** des informations supplémentaires s'ajoutant aux objets topographiques représentés sont affichées et/ou lues.

10. Procédé selon la revendication 9, **caractérisé en ce que** les informations supplémentaires sont affichées de manière déclenchée par l'utilisateur, notamment dans une fenêtre surgissante.

11. Procédé selon les revendications 9 ou 10, **caractérisé en ce qu'**une communication est effectuée de manière déclenchée par l'utilisateur, celle-ci concernant un point d'intérêt comportant un numéro de téléphone et/ou une adresse de courrier électronique stockés en tant qu'informations supplémentaires.

12. Procédé selon l'une quelconque des revendications 1 à 11, **caractérisé en ce qu'**un guidage routier vers un point d'intérêt sélectionné sur la carte affichée est lancé de manière déclenchée par l'utilisateur.

13. Dispositif destiné à mettre en oeuvre le procédé selon l'une quelconque des revendications précédentes.
